# EUROPÄISCHE PATENTSCHRIFT

(11) **EP 3 202 291 B1**
(45) Veröffentlichungstag und Bekanntmachung des Hinweises auf die Patenterteilung: **05.06.2019**
(21) Anmeldenummer: 17000171.3
(22) Anmeldetag: 03.02.2017
(51) Int. Cl.: A47J 36/38, A47J 37/12, A47J 27/16

(54) **GARGERÄT, SOWIE DORT VORGESEHENE ABFLUSSEINRICHTUNG**
COOKING DEVICE, AND DRAINAGE DEVICE ON COOKING DEVICE
APPAREIL DE CUISSON ET DISPOSITIF D'ÉCOULEMENT ASSOCIÉ

(30) Priorität: 04.02.2016 DE 102016001255
(43) Veröffentlichungstag der Anmeldung: 09.08.2017
(73) Patentinhaber: GUSTATUS Holding GmbH, 97980 Bad Mergentheim (DE)
(72) Erfinder: Klouda, Jaroslava, 82256 Fürstenfeldbruck (DE)
(74) Vertreter: 2s-ip Schramm Schneider Bertagnoll Patent- und Rechtsanwälte Part mbB

(56) Entgegenhaltungen:
- EP-A1- 1 488 721
- DE-A1-102013 008 272
- DE-U1-202013 004 549
- DE-U1-202014 100 217

## Beschreibung

### Gebiet der Erfindung

Die Erfindung bezieht sich auf ein Gargerät, insbesondere in der Bauart einer kippbaren oder nichtkippbaren Bratpfanne, deren wannenartiger Tiegel mit einer an das innere Abwassersystem des Gargerätes angeschlossenen steuerbaren Abflusseinrichtung versehen ist.

### Hintergrund der Erfindung

Aus EP 1 488 721 A1 ist eine pfannenartige Gareinrichtung bekannt die eine Abflusseinrichtung umfasst bei welcher ein koaxial zur Tiegel-Kippachse verlaufender Zylinders eine Abflussöffnung im Boden des Tiegels öffnet oder schließt.

Bei einer Multifunktions-Pfanne umfasst der Garprozess Kochen, Dämpfen, Grillen und Frittieren. Beim Grillen und vor allem beim Vorheizen vor dem Grillen übersteigt die Bodentemperatur 250°C. Das Fett und die Gargut-Reste setzen sich auf den Boden des Tiegels ab und damit auch auf die Abflussöffnung. Von daher gelangen sie auf die Kolbendichtung und beim Einwirken der hohen Bodentemperatur verbinden sie sich mit der Kolbendichtung durch Verkrustung. Beim Schließen und Öffnen führt der Kolben eine lineare Bewegung im Zylinder aus, womit die, mit den Wänden des Zylinders durch das Verkrusten verbundene Dichtung hohen axialen Kräften ausgesetzt ist, die zur schnellen Abnutzung der Dichtung führen, wodurch der Dichtigkeit beeinträchtigt wird. Bei einer Überdruck-Pfanne kann diese Undichtigkeit zum funktionellen Ausfall des Gargerätes führen. Die zum Zylinder radial verlaufende Anbindung des Tiegelablaufes bildet zwischen der Eintrittsfläche der Ablauföffnung und der Kolbenfläche einen Stauraum, in dem sich auch das Bratfett einsammelt, wodurch ein höherer Fettverbrauch verursacht ist. Diese Vertiefung im Bodenbereich führt auch zur Reduktion der Grillfläche des Geräts.

Aus der DE 20 2014 100 217 U1 ist eine Abflusseinrichtung bekannt, in der sich der Abflussstöpsel koaxial zur Ablauföffnungs-Achse bewegt. Die Dichtung liegt auf der konischen Ablauffläche auf, wobei diese Fläche beim Vorheizen und beim Grillen Temperaturen über 250° aufweist. Auch in diesem Fall führt die hohe Temperatur zur Verkrustung der Ablauföffnungsfläche mit der Abflussstöpsel-Dichtung. Durch die lineare Bewegung des Abflussstöpsels wird die Dichtung aufgrund von Reibung und Verkrustung weiter belastet, die entsprechenden Kräfte können hierbei auch zur Ablauföffnungs-Achse parallel verlaufende Komponenten aufweisen. Bei dieser, durch die Fettverkrustung verursachten Verbindung zwischen der Dichtung und der konischen Ablauf-Fläche führt diese zur schnellen Abnutzung der Dichtung und dadurch zum schnellen Verlust der Dichtigkeit, die bei einem Überdruckgerät zum Funktionsverlust führt. Die Rotationsbewegung des Koppelgliedes, die auch eine, zur Achse des Stößels senkrecht verlaufende Reibungskraft hervorruft, verursacht eine zusätzliche Abnutzung der Dichtung am Stößel, wodurch die, aus dem Gargerät auslaufende Flüssigkeit im Bereich der Stößel-Führung hinaustropft. Unterhalb des Stößel-Antriebs befinden sich die Hochspannungsleitun-gen für die Heizelemente samt der Steuerung, deren Isoliereigenschaften beim Heraustropfen der Flüssigkeit beeinträchtigt werden. Der gesamte Konstruktionsaufwand ist, im Vergleich zum Nutzen der Vorrichtung, hoch.

### Aufgabe der Erfindung

Es ist Aufgabe der Erfindung, die Dichtigkeitsprobleme, die im kausalen Zusammenhang mit der Bewegung des Abflussstopfens stehen, zu begegnen, wobei der Konstruktions- und der Fertigungs-Aufwand niedrig gehalten werden sollen.

### Erfindungsgemäße Lösung

Die oben genannte Aufgabe wird erfindungsgemäß durch ein Gargerät mit den in Patentanspruch 1 angegebenen Merkmalen gelöst.

Im Rahmen des erfindungsgemäßen Konzepts umfasst das Gargerät einen linear verschiebbaren Stößel, der zumindest in dem Verschlussbereich eine Rotationsbewegung ausführt, die über den Abflussstöpsel auf die Abflussstöpsel-Dichtung übertragen wird. Dadurch verläuft die Trennung der mit der Ablaufoberfläche verkrusteten Dichtung schonend und wirkt sich positiv auf die Lebensdauer der Dichtung und damit auch auf die Dauer der Funktionalität eines Überdruckgeräts aus.

Die, für die Erhaltung der Dichteigenschaften notwendige Voraussetzung der koaxialen/ linearen Bewegung des Stößels mit dem Abflussstöpsel und die Rotation des Stößels sind durch den erfindungsgemäßen Antriebsmechanismus gelöst. Dieser Mechanismus setzt die Antriebsrotationsbewegung auf eine einfache Art in die lineare Bewegung des Stößels mit dem Abflussstöpsel um. Somit bewegt sich der rotierende Abflussstöpsel linear und gleichzeitig auch zur Abflussöffnung koaxial.

Der Erfindung liegt damit die überraschende Erkenntnis zu Grunde, dass bei genauer linearer koaxialer Bewegung des Stößels und zusätzlicher Rotationsbewegung des Stößels, die Lebensdauer der Dichtung auf dem Ablaufstöpsel im Vergleich zum Stand der Technik wesentlich verlängert ist. Auch der Konstruktions- und der Fertigungsaufwand sind reduziert.

Die eingangs angegebenen Aufgabe wird weiterhin auch gelöst durch eine Abflusseinrichtung für ein Gargerät das einen wannenartigen Behälter, zum Aufnehmen und Garen von Nahrungsmitteln umfasst, wobei sich in einem Bodenbereich des Behälters eine Abflussöffnung befindet, die durch einen gegenüber der Abflussöffnung in eine Freigabestellung und in eine Schließstellung bringbaren Abflussstöpsel geöffnet, bzw. geschlossen werden kann, wobei der Abflussstöpsel über eine Öffnungsmechanik in das Gargerät eingebunden ist, und diese Öffnungsmechanik derart gestaltet ist, dass durch diese eine zwangsweise Drehung des Abflussstöpsels, sowie eine translatorische Verlagerung desselben bewerkstelligbar ist.

Weitere vorteilhafte Merkmale, Eigenschaften und Einzelheiten der Erfindung ergeben sich aus den Unteransprüchen und deren Kombinationen sowie aus den nachfolgenden Beschreibungen bevorzugter Ausführungsformen der Erfindung, die anhand von schematischen Abbildungen näher erläutert werden. Es zeigt:
- Fig.1: eine schematische Darstellung der erfindungsgemäßen Vorrichtung in einem Zustand in welchem sich der Ablaufstöpsel in Schließposition befindet;
- Fig.2: eine schematische Darstellung der erfindungsgemäßen Vorrichtung in einem Zustand in welchem sich der Ablaufstöpsel in einer Öffnungsstellung befindet;
- Fig.3: eine schematische Darstellung der erfindungsgemäßen Vorrichtung mit der angeschlossenen Reinigungsleitung und dem Stößel in der unteren Lage;
- Fig.4: eine schematische Darstellung der erfindungsgemäßen Vorrichtung mit der angeschlossenen Reinigungsleitung und dem Stößel in der oberen Lage;
- Fig.5: eine schematische Darstellung der erfindungsgemäßen Vorrichtung mit dem Ablaufstöpsel in der geschlossenen Lage, der durch ein Schutzgitter gegen eine Beschädigung geschützt ist;
- Fig.6: eine schematische Darstellung der erfindungsgemäßen Vorrichtung mit dem Ablaufstöpsel in der hochgefahrenen Lage, der durch ein Schutzgitter gegen eine Beschädigung geschützt ist;
- Fig.7: eine schematische Darstellung der erfindungsgemäßen Vorrichtung mit dem Ablaufstöpsel in der geschlossenen Lage und mit einer Magnethalterung für das Schutzgitter;
- Fig.8: eine schematische Darstellung der erfindungsgemäßen Vorrichtung mit dem Verschlussventil, das synchron mit dem Ablaufstöpsel angetrieben ist.

### Ausführliche Beschreibung der Figuren

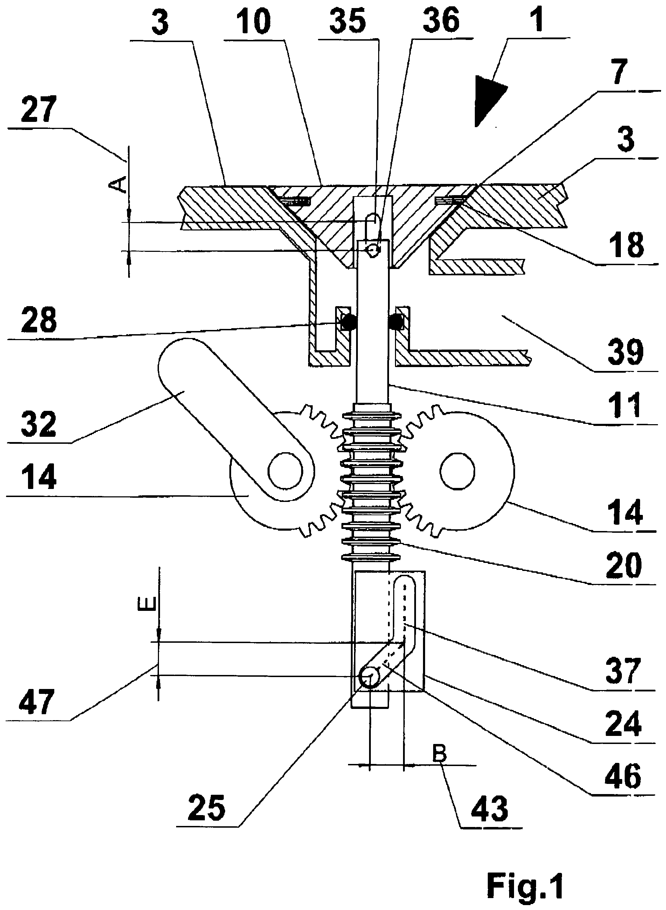

Bei den in den Figuren 1 bis 8 dargestellten Aufbauten des Gargeräts sind sämtliche umgebene Komponenten wie Heizungen, Antriebe, Pumpen und der gleichen, weggelassen.

Die Darstellung nach Figur 1 zeigt eine schematische Darstellung der erfindungsgemäßen Abfluss-Einrichtung bei welcher sich der Abflussstöpsel 10 in einer Lage befindet welche eine Schließstellung darstellt.

Im Bodenbereich 3 des Tiegels 2 befindet sich die Abflussöffnung 7 mit der Dicht-Oberfläche 49, zu der sich der bewegliche Abflussstöpsel 10 mit der Abflussstöpsel-Dichtung 18 in mechanischer Wechselwirkung befindet. Die Abflussstöpsel-Dichtung 18 ist verdrehsicher zum Abflussstöpsel 10 angebracht. Der Abflussstöpsel 10 weist eine längliche Öffnung 35 auf, in der sich der Mitnehmer 36 vom Stößel 11 auf der Länge A (27) bewegt. Am Stößel 11 ist ein Rotations-Zahn-Kamm 20 angebracht, der als zylindrische Rotations-Fläche mit der bildenden Kurve eines Zahn-Kamm-Profils entstand. Dieser Rotations-Zahn-Kamm 20 befindet sich in der Angriffsstellung mit den beiden Zahnrädern 14. Beim Antreiben von zumindest einem der beiden Zahnräder 14 über den Antrieb 32 ist der Stößel 11, entsprechend der Drehrichtung des Zahnrades 11, geschoben und dabei ist über den, durch die Kulisse 24 und deren Bahn 37 geführten Greiffinger 25 in Rotation 41 versetzt. Diese Rotation 41 überträgt sich über den Mitnehmer 36 auf den Abflussstöpsel 10.

Beim Öffnen der Abflussöffnung 7, d.h. beim Hochschieben des Abflussstöpsels 10 verursacht die, während der kraftlosen linearen Bewegung des Mitnehmers 36 in der länglichen Öffnung 35 hervorgerufene Rotation des Abflussstöpsels 10 eine schonende Trennung der Abflussstöpsel-Dichtung 18 von der Dicht-Oberfläche 49 ohne den Abflussstöpsels 10 in der Axialrichtung 26 zu bewegen. Die Voraussetzung für diesen Bewegungsablauf ist, dass die Verkrustungs-Kräfte größer sind, als die Reibung zwischen dem Mitnehmer 36 und den Führungsflächen der länglichen Öffnung 35 in der axialen Richtung 26. Bei einer Schließung der Abflussöffnung 7, d.h. beim Herunterfahren des Abflussstöpsels 10, während dessen der Abflussstöpsels 10 auf der Fläche des Mitnehmers 36 durch das Eigengewicht aufliegt, verursacht die Rotation des Abflussstöpsels 10 mit der Abflussstöpsel-Dichtung 18 eine Reinigung der Dicht-Oberfläche 49 und dadurch die Verbesserung der Dicht-Eigenschaften. Somit ist die Lebensdauer der Dichtung 18 verlängert und die Funktionalität der Abflussvorrichtung auf Dauer gesichert. Das Bogenmaß 43 der Rotation 41 des Abflussstöpsels 10 hängt von der Länge E (47) und von der Neigung der Bahn 46 ab.

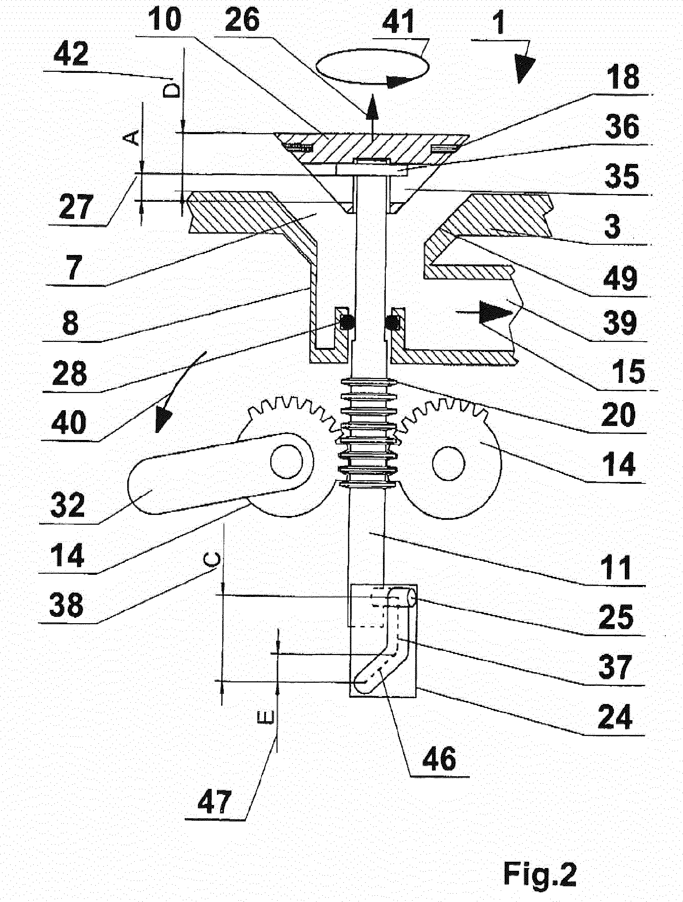

Die Darstellung nach Figur 2 zeigt eine schematische Darstellung der erfindungsgemäßen Abfluss-Einrichtung ähnlich Figur 1, wobei sich nunmehr der Abflussstöpsel 10 sich in der geöffneten Lage befindet und in dieser geöffneten Lage des Abflussstöpsels 10 fließt die in der Pfanne sich befindende Flüssigkeit in der Ablaufrichtung 15 durch den Ablauf 39 ab.

Die gezeichnete geneigte Bahn 46 der Kulisse 24 belegt in der Axialrichtung des Stößels 26 nur einen Teil E(47) der Hublänge C (38), wobei sich diese geneigte Bahn 46 auf der vollen Länge C (38) befinden kann - wie eine Spiralfläche 23. Der Abflussstöpsel 10 liegt durch das Eigengewicht auf dem Mitnehmer 36 auf.

Bei der Öffnungs- und Schließ-Prozedur der Abflussöffnung 7 durch den Antrieb 40 des Zahnrades 14 bewegt sich der Stößel 11 und dadurch auch der Greiffinger 25, der die Rotation des Abflussstöpsels 10 hervorruft.
Bei der Schließbewegung bewegt sich der Stößel 26 nach unten und nachdem der Abflussstöpsel 10 auf der Dicht-Oberfläche der Abflussöffnung 49 aufliegt, bewegt sich der Mitnehmer 36 in der länglichen Öffnung 35 und zumindest in diesem Schließbereich wird der Greiffinger 25, durch den vorgegebenen Verlauf der geneigten Bahn 46 in der Kulisse, in die Rotation 41 versetzt. Zum Ende des Schließablaufes ist der Abflussstöpsel 10 mit der Abflussstöpsel-Dichtung 18 gegen die Dicht-Oberfläche der Abflussöffnung 49 gedrückt, womit die, zum dichten Verschließen der Abflussöffnung 7 notwendigen Voraussetzungen erreicht sind.

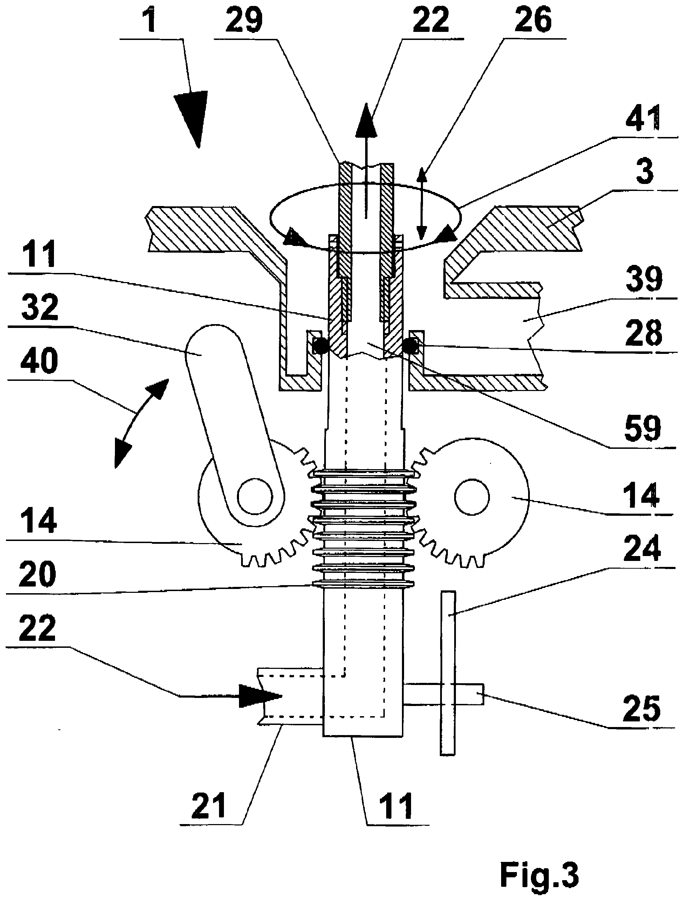

Die Darstellung nach Figur 3 zeigt eine schematische Darstellung der erfindungsgemäßen Abfluss-Vorrichtung, in der der Abflussstöpsels 10 demontiert ist und die Anbindung 29 der Reinigungsmechanik an seiner Stelle angebracht ist. Der Stößel 11 befindet sich in der unteren Lage. Die Reinigungsflüssigkeit 22 ist durch die Zuführung 21 und anschließend durch den hohlen Stößel 11 zu der Anbindung 29 geführt, von daher weiter an die Reinigungsvorrichtung geleitet ist. Durch den oszillierenden Antrieb 32 bewegt sich auch der Stößel 11 mit der Reinigungsvorrichtung hoch und runter, wobei durch die Führung des Greiffingers 25 in der Kulisse 24 noch die Rotationsbewegung 41 der gesamten Reinigungsvorrichtung hervorgerufen wurde. Der Reinigungsdruck ist vom Niedrigdruck bis zum Hochdruck variabel.

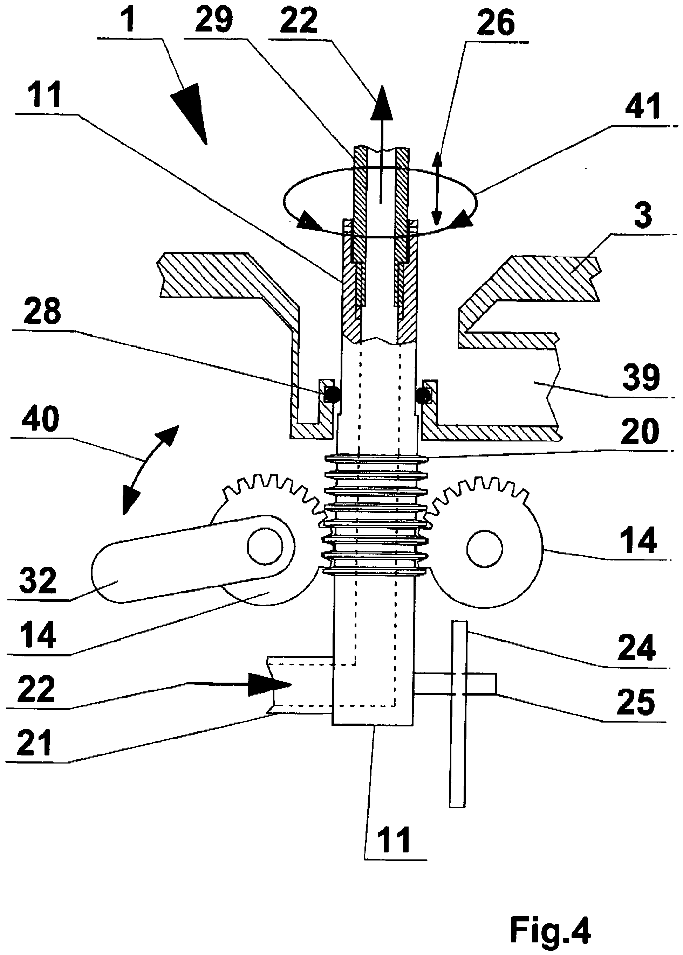

Die Darstellung nach Figur 4 zeigt eine ähnliche schematische Darstellung der erfindungsgemäßen Abfluss-Vorrichtung wie in der Figur 3, in der der Stößel 11 sich auch mit der Reinigungsanbindung 29 in der oberen Lage befindet.

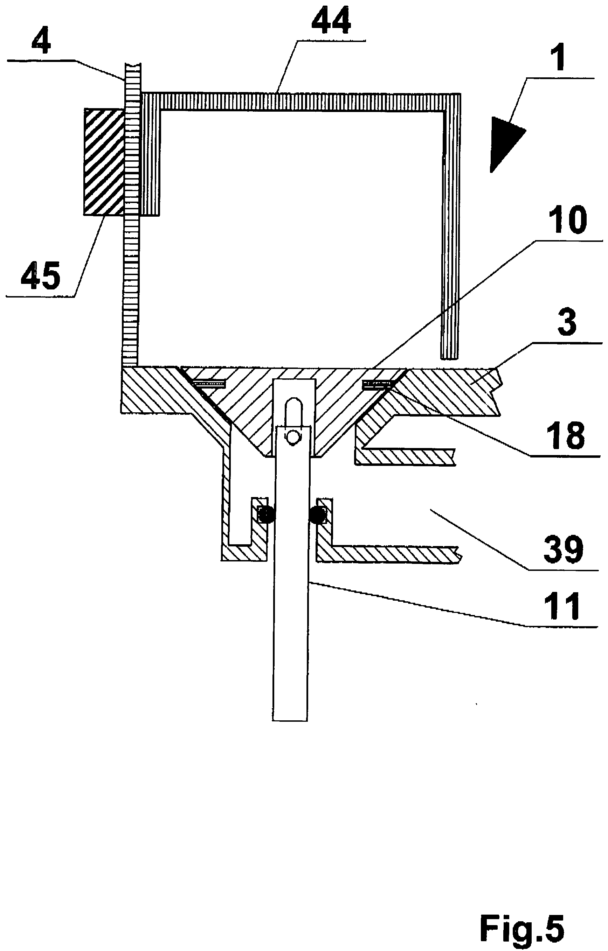

Die Darstellung nach Figur 5 zeigt eine schematische Darstellung der erfindungsgemäßen Abfluss-Vorrichtung mit dem angebrachten Schutzgitter 44, wobei der Abflussstöpsel 10 sich in der geschlossenen Lage befindet. Dieses Schutzgitter 44 wird beim Kochen im abzulassenden Wasser verwendet, um die hochgestellte Mechanik vom Abflussstöpsel 10 und dem Stößel 11 vom Beschädigen zu schützen. Diese Beschädigung kann durch das Umrühren des abzufließenden Wassers mit einem Kochlöffel satt finden. Das Schutzgitter 44 ist in der vorgegebenen Lage durch einen Magneten 45 gehalten.

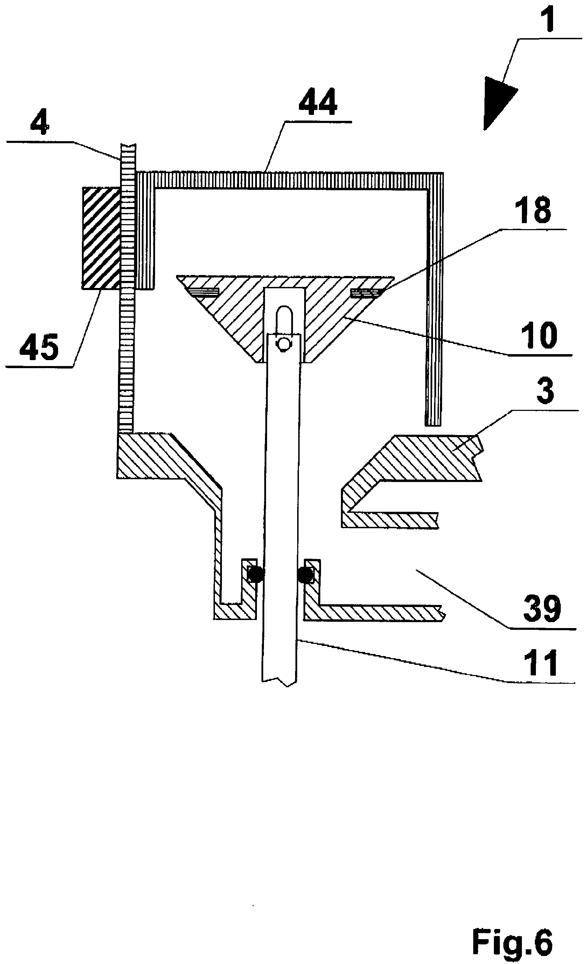

Die Darstellung nach Figur 6 eine ähnliche schematische Darstellung der erfindungsgemäßen Abfluss-Vorrichtung wie in der Figur 5 mit dem Unterschied, dass der Stößel 11 sich in der geöffneten Lage befindet.

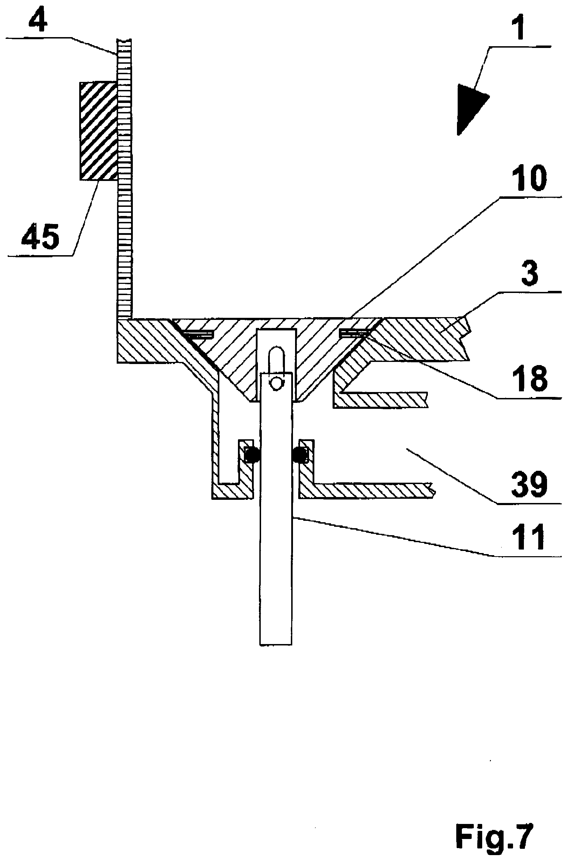

Die Darstellung nach Figur 7 zeigt eine ähnliche schematische Darstellung der erfindungsgemäßen Abfluss-Vorrichtung wie in der Figur 5, in der sich der Abflussstöpsel 10) in der geschlossenen Lage befindet. Da in dem aktuellen Garprozess keine abzulassende Flüssigkeit angewandt wird, bleibt auch der Abflussstöpsel 10 auf Dauer in der geschlossenen Lage und dadurch ist auch das Schutzgitter 44 nicht verwendet. Der Magnet, der als Permanent- oder Elektro-Magnet gestaltet ist, ist von außen an der Tiegelwand (4) angebracht.

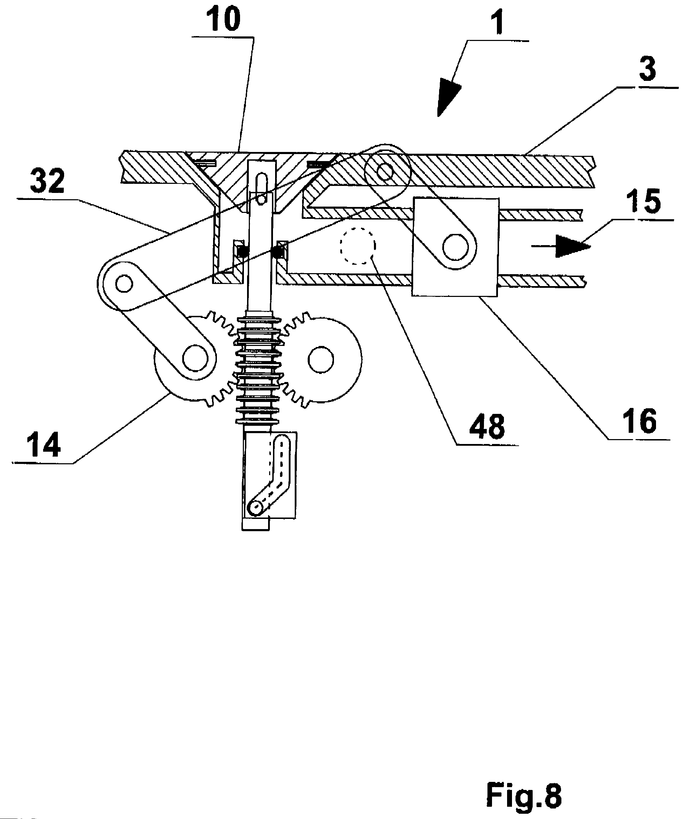

Die Darstellung nach Figur 8 zeigt eine schematische Darstellung der erfindungsgemäßen Abfluss-Vorrichtung mit dem synchron zum Zahnrad 14 angetriebenen Verschlussventil (16). Beim Hoch-stellen des Abflussstöpsels 10 in die geöffnete Lage ist auch das Verschlussventil 16 geöffnet. Falls das Gargerät 1 mit einer Reinigungsvorrichtung ausgestattet ist, ist das Verschlussventil 16 unabhängig vom Zahnradantrieb 32 durch einen eigenen, nicht gezeichneten Antrieb betätigt, um die Umlenkung der Reinigungsflüssig-keit 22 zur Reinigungspumpe durch die Anbindungsöffnung 48 zu ermöglichen.

### Bezugszeichenliste

- 1.: Gargerät
- 2.: Tiegel
- 3.: Bodenbereich
- 4.: Wände
- 7.: Abflussöffnung
- 8.: Abfluss-Rohr
- 10.: Abflussstöpsel
- 11.: Stößel
- 12.: Zahn-Kamm
- 14.: Zahnrad
- 15.: Ablaufrichtung
- 16.: Verschlussventil
- 17.: Kugelhahn
- 18.: Abflussstöpsel-Dichtung
- 19.: Achse des Abflussstöpsels
- 20.: Rotations-Zahn-Kamm
- 21: Zuführung für Reinigungsflüssigkeit
- 22.: Reinigungsflüssigkeit
- 23.: Spiralfläche
- 24.: Kulisse
- 25.: Greiffinger
- 26.: Axialrichtung des Stößels
- 27.: **A**: Bewegungsspiel
- 28.: Zylinderdichtung
- 29.: Anbindung der Reinigungsmechanik
- 30.: Reinigungsmechanik
- 31.: Stöpsel-Achse
- 32.: Antrieb des Zahnrades (Handantrieb oder automatischer Antrieb)
- 33.: Bordscheibe des Zahnrades
- 34.: Antriebsvorrichtung für Rotation des Stößels
- 35.: Längliche Öffnung im Abflussstöpsel
- 36.: Mitnehmer
- 37.: Bahn des Greiffingers in der Kulisse
- 38.: **C**: Länge der Bahn in Axialrichtung des Stößels
- 39.: Ablauf
- 40.: Drehrichtung des Zahnradantriebs
- 41.: Rotationsvektor des Abflussstöpsels
- 42.: **D**:Hub des Stöpsels (D=C-A)
- 43.: **B**: Bogenmaß der Rotation
- 44.: Schutzgitter für ausgefahrenen Stöpsel
- 45.: Magnet für das Halten des Schutzgitters (Permanent- oder Elektro-Magnet)
- 46.: geneigte Bahn in der Kulisse
- 47.: **E**: Länge der geneigten Bahn in der Axialrichtung des Stößels
- 48.: Anbindungsöffnung der Reinigungspumpe
- 49.: Dicht-Oberfläche der Abflussöffnung
- 50.: Hohlraum im Stößel zum Zuführen der Reinigungsflüssigkeit

## Patentansprüche

1. Gargerät (1) bestehend aus einem wannenartigen Behälter, vorzugsweise Tiegel (2), zum Aufnehmen und Garen von Nahrungsmitteln, aufweisend den Bodenbereich (3) mit angrenzenden Wänden (4) und einer dem Bodenbereich (3) gegenüberliegend offenen Seite, die durch einen Deckel verschließbar ist, wobei sich in dem Bodenbereich (3) eine Abflussöffnung (7) befindet, die durch einen zur Abflussöffnung (7) koaxialen und zur Abflussrohr-Achse parallel beweglichen Abflussstöpsel (10) gesteuert verschließbar ist, **dadurch gekennzeichnet, dass** der Abflussstöpsel (10) über einen Stößel (11) betätigt wird, und dieser mit einer Vorrichtung zur Rotation des Abflussstöpsels (10) um die Abflussstöpsel-Achse gekoppelt ist.

2. Gargerät nach wenigstens einem der vorherigen Ansprüche, **dadurch gekennzeichnet, dass** die Abflussstöpsel-Dichtung (18) verdrehsicher am Abflussstöpsel (10) angebracht ist, dass der Stößel (11) des Abflussstöpsels (10) mit einem Zahn-Kamm (12) versehen ist; dass der Zahn-Kamm (12) als Rotationskörper (20) gestaltet ist; dass der Zahn-Kamm (12) sich zumindest mit einem Zahnrad (14) in mechanischer Wechselwirkung befindet; und dass nach dem Abfluss (8) in der Ablaufrichtung (15) ein Verschlussventil (16) angebracht ist.

3. Gargerät nach wenigstens einem der vorherigen Ansprüche, **dadurch gekennzeichnet, dass** in dem Bereich der Abflussöffnung (7) ein, durch den außen liegenden Magneten (45) gehaltenes Schutzgitter (44) trennbar angebracht ist, und/oder dass der Stößel (11) einen Hohlraum (59) zum Zuführen der Reinigungsflüssigkeit (22) aufweist.

4. Gargerät nach wenigstens einem der vorherigen Ansprüche, **dadurch gekennzeichnet, dass** die Rotation (41) des Abflussstöpsels (10) über eine Schraubenfläche (23) und/oder eine Kulisse (24) mit Greiffinger (25) und/oder über Bordscheiben (33) der Zahnräder (14) und/oder über eine außen liegende Antriebsvorrichtung (34) erfolgt.

5. Gargerät nach wenigstens einem der vorherigen Ansprüche, **dadurch gekennzeichnet, dass** zwischen der länglichen Öffnung (25) des Abflussstöpsels (10) und dem Mitnehmer (36) des Stößels (11) in der Axialrichtung (26) ein Bewegungsspiel A (27) ist.

6. Gargerät nach wenigstens einem der vorherigen Ansprüche, **dadurch gekennzeichnet, dass** das Verschlussventil (16) ein Kugelhahn (17) ist.

7. Gargerät nach wenigstens einem der vorherigen Ansprüche, **dadurch gekennzeichnet, dass** das Verschlussventil (16) synchron mit dem Abflussstöpsel (10) angetrieben ist.

8. Gargerät nach wenigstens einem der vorherigen Ansprüche, **dadurch gekennzeichnet, dass** der Antrieb (40) von zumindest einem Zahnrad (14) per Hand, elektromechanisch oder pneumatisch erfolgt.

9. Gargerät nach wenigstens einem der vorherigen Ansprüche, **dadurch gekennzeichnet, dass** an den hohlen Stößel (11) die Zuführung (21) und die Anbindung (29) mit der Reinigungsmechanik (30) angeschlossen sind.

10. Gargerät nach wenigstens einem der vorherigen Ansprüche, **dadurch gekennzeichnet, dass** die Reinigungsflüssigkeit (22) unter Hochdruck steht.

## Claims

1. A cooking device (1) consisting of a tub-like container, preferably a pot (2), for containing and cooking food, having the bottom region (3) with adjacent walls (4) and an open side opposite the bottom region (3), which may be closed by a lid, wherein a drain opening (7) is positioned in the bottom region (3), which is controllably closable by a drain plug (10), which is coaxial to the drain opening (7) and is movable parallel to the axis of the drain pipe, **characterised in that** the drain plug (10) is actuated by means of a plunger (11) and the plunger is coupled with a device for rotating the drain plug (10) about the axis of the drain plug.

2. The cooking device according to at least one of the preceding claims, **characterized in that** the drain plug seal (18) is non-rotatably attached to the drain plug (10), that the plunger (11) of the drain plug (10) is provided with a tooth comb (12); that the tooth comb (12) isconfigured as a rotation body (20); that the tooth comb (12) is in mechanical interaction with at least a gear (14); and that a closure valve (16) is attached after the drain (8) in the direction of drainage (15).

3. The cooking device according to at least one of the preceding claims, **characterized in that** in the region of the drain opening (7) a protective grating (44), which is held by the external magnet (45) is detachably attached, and/or that the plunger (11) has a cavity (59) for feeding the cleaning liquid (22).

4. The cooking device according to at least one of the preceding claims, **characterized in that** the rotation (41) of the drain plug (10) occurs via a screw surface (23) and/or a slide guide (24) having gripping fingers (25) and/or via flanged disks (33) of the gears (14) and/or via an externally arranged drive device (34).

5. The cooking device according to at least one of the preceding claims, **characterized in that** a movement clearance A (27) is provided in the axial direction (26) between the elongated opening (25) of the drain plug (10) and the follower (36) of the plunger (11).

6. The cooking device according to at least one of the preceding claims, **characterized in that** the closure valve (16) is a ball valve (17).

7. The cooking device according to at least one of the preceding claims, **characterized in that** the closure valve (16) is driven synchronously with the drain plug (10).

8. The cooking device according to at least one of the preceding claims, **characterized in that** the driving (40) of at least one gear (14) occurs manually, electro-mechanically or pneumatically.

9. The cooking device according to at least one of the preceding claims, **characterized in that** the feed line (21) and the connection (29) with the cleaning mechanism (30) are connected to the hollow plunger (11).

10. The cooking device according to at least one of the preceding claims, **characterized in that** the cleaning liquid (22) is under high pressure.

## Revendications

1. Appareil de cuisson (1) comprenant un récipient en forme de cuve, de préférence un poêlon (2), destiné à recevoir et à cuire des aliments, comprenant la zone de fond (3) avec des parois adjacentes (4) et un côté ouvert en face de la zone de fond (3) et pouvant être fermé par un couvercle, dans lequel un orifice d'évacuation (7), pouvant être fermé de manière commandée par un bouchon d'évacuation (10) coaxial à l'orifice d'évacuation (7) et se déplaçant parallèlement à l'axe du tuyau d'évacuation, se trouve dans la zone de fond (3), **caractérisé en ce que** le bouchon d'évacuation (10) est actionné au moyen d'un poussoir (11) et celui-ci est couplé à un dispositif de mise en rotation du bouchon d'évacuation (10) autour de l'axe du bouchon d'évacuation.

2. Appareil de cuisson selon au moins l'une des revendications précédentes, **caractérisé en ce que** le joint du bouchon d'évacuation (18) est fixé au bouchon d'évacuation (10) de manière résistante à la torsion ; **en ce que** le poussoir (11) du bouchon d'évacuation (10) est pourvu d'un peigne denté (12) ; **en ce que** le peigne denté (12) est conçu comme un corps rotatif (20) ; **en ce que** le peigne denté (12) est en interaction mécanique avec au moins une roue dentée (14) ; et **en ce qu'**une soupape de fermeture (16) est fixée dans la direction d'écoulement (15) selon le sens d'écoulement (8).

3. Appareil de cuisson selon au moins l'une des revendications précédentes, **caractérisé en ce que,** dans la zone de l'orifice d'évacuation (7), une grille de protection (44) maintenue par l'aimant (45) situé à l'extérieur est fixée de manière amovible et/ou **en ce que** le poussoir (11) est doté d'une cavité (59) destinée à l'envoi du liquide de nettoyage (22).

4. Appareil de cuisson selon au moins l'une des revendications précédentes, **caractérisé en ce que** la rotation (41) du bouchon d'évacuation (10) est effectuée par une surface hélicoïdale (23) et/ou une coulisse (24) pourvue d'un doigt de préhension (25) et/ou par les poulies à rebord (33) des roues dentées (14) et/ou par un dispositif d'entraînement (34) situé à l'extérieur.

5. Appareil de cuisson selon au moins l'une des revendications précédentes, **caractérisé en ce qu'**il existe un jeu de mouvement A (27) entre l'ouverture allongée (25) du bouchon d'évacuation (10) et l'entraînement (36) du poussoir (11) dans le sens axial (26).

6. Appareil de cuisson selon au moins l'une des revendications précédentes, **caractérisé en ce que** la soupape de fermeture (16) est un robinet à tournant sphérique (17).

7. Appareil de cuisson selon au moins l'une des revendications précédentes, **caractérisé en ce que** la soupape de fermeture (16) est entraînée de manière synchrone avec le bouchon d'évacuation (10).

8. Appareil de cuisson selon au moins l'une des revendications précédentes, **caractérisé en ce que** l'entraînement (40) d'au moins une roue dentée (14) est effectué à la main, de manière électromécanique ou pneumatique.

9. Appareil de cuisson selon au moins l'une des revendications précédentes, **caractérisé en ce que** le dispositif d'alimentation (21) et le dispositif de connexion (29) sont fixés au mécanisme de nettoyage (30) au niveau du poussoir (11) creux.

10. Appareil de cuisson selon au moins l'une des revendications précédentes, **caractérisé en ce que** le liquide de nettoyage (22) est sous haute pression.
